# FASCICULE DE BREVET EUROPEEN

(11) **EP 4 590 951 B1**
(45) Date de publication et mention de la délivrance du brevet: **02.12.2026**
(21) Numéro de dépôt: 23769257.9
(22) Date de dépôt: 14.09.2023
(51) Int. Cl.: F02K 3/077, F02C 7/14

(54) **TURBOMACHINE AXIALE TRIPLE-FLUX AVEC ÉCHANGEUR DE CHALEUR**
AXIALTURBOMASCHINE MIT DREIFACHFLUSS UND WÄRMETAUSCHER
TRIPLE-FLOW AXIAL TURBOMACHINE WITH HEAT EXCHANGER

(30) Priorité: 23.09.2022 FR 2209649; 23.09.2022 FR 2209651
(43) Date de publication de la demande: 30.07.2025
(73) Titulaire: SAFRAN AIRCRAFT ENGINES, 75015 Paris (FR)
(72) Inventeur: AVOYNE, Valentin Sébastien Simon, 77920 Samois sur Seine (FR); BEUTIN, Bruno Albert, 91000 EVRY (FR)
(74) Mandataire: Ipsilon Luxembourg
(86) Numéro de dépôt international: PCT/EP2023/075307
(87) Numéro de publication internationale: WO 2024/061737

(56) Documents cités:
- US-A1- 2021 108 597
- US-B2- 11 448 132
- US-B2- 9 677 474

## Description

### Domaine technique

L'invention a trait au domaine des turbomachines et plus particulièrement des turbomachines à trois flux. L'invention porte sur l'agencement d'un échangeur de chaleur destiné au refroidissement de l'huile de la turbomachine.

### Technique antérieure

Le changement climatique est une préoccupation majeure pour de nombreux organes législatifs et de régulation à travers le monde. En effet, diverses restrictions sur les émissions de carbone ont été, sont ou seront adoptées par divers états. En particulier, une norme ambitieuse s'applique à la fois aux nouveaux types d'avions mais aussi ceux en circulation nécessitant de devoir mettre en œuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des avions. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des avions.

Par voie de conséquence, la Déposante travaille en permanence à la réduction de son incidence climatique négative par l'emploi de méthodes et l'exploitation de procédés de développement et de fabrication vertueux et minimisant les émissions de gaz à effet de serre au minimum possible pour réduire de l'empreinte environnementale de son activité.

Ces travaux de recherche et de développement soutenus portent à la fois sur les nouvelles générations de moteurs d'avions, l'allègement des appareils, notamment par les matériaux employés et les équipements embarqués allégés, le développement de l'emploi des technologies électriques pour assurer la propulsion, et, indispensables compléments aux progrès technologiques, les biocarburants aéronautiques.

Dans ce contexte, l'invention porte plus particulièrement sur les aspects liés à l'agencement des échangeurs de chaleur dans les turbomachines. En effet, dans une turbomachine, il est généralement nécessaire de refroidir l'huile du circuit de lubrification. Il est connu de disposer un ou plusieurs échangeur(s) de chaleur dans le flux tertiaire d'une turbomachine à trois flux, c'est-à-dire dans le flux radialement intermédiaire entre le flux primaire dirigé vers la chambre de combustion et le flux secondaire, externe.

L'intégration d'un échangeur dans le troisième flux, confiné entre le flux primaire et le flux secondaire, pose des difficultés de montage et d'accessibilité en cas de maintenance mais aussi des contraintes en fonctionnement du fait de la dilatation thermique de l'échangeur. Un échangeur du type « brique » inspiré du document FR 3 089 248 A1 ne répond pas à ces contraintes et n'est donc pas adapté pour le troisième flux.

L'intégration d'un échangeur dans un troisième flux d'une turbomachine à trois flux présente donc des défis liés à son encombrement, son assemblage, son accessibilité, son fonctionnement et également la masse globale des moyens employés pour le fixer au carter.

Des solutions ont déjà été proposées pour améliorer le refroidissement d'huile ou l'intégration d'échangeurs dans les turbomachines.

Le document de brevet publié US 2021/0108597 A1 illustre l'intégration d'un échangeur de chaleur dans un flux secondaire de turbomachine afin d'optimiser les échanges thermiques.

Le document de brevet US 9 677 474 B2 décrit une architecture d'échangeur associée à un carter de moteur, facilitant l'intégration et la maintenance.

Le document de brevet US 11 448 132 B2 propose quant à lui des échangeurs de chaleur compacts à circuits multiples destinés à des applications aéronautiques.

Ces différentes approches témoignent de l'intérêt croissant pour l'optimisation de l'intégration des échangeurs dans les turbomachines, mais ne répondent pas entièrement aux contraintes d'encombrement, de masse, de rendement et de sécurité évoquées ci-dessus.

### Exposé de l'invention

La présente invention a pour objectif de pallier au moins un des inconvénients de l'état de la technique susmentionné. Plus particulièrement, l'invention a pour objectif de proposer une solution simple, performante et économique visant à résoudre les inconvénients de la conception/fabrication des turbomachines de l'état de la technique. En particulier, l'invention vise à proposer une solution qui permette un refroidissement efficace dans un encombrement restreint sans rajout de masse et sans entrave du rendement de la turbomachine, mais aussi en garantissant la sûreté de la turbomachine en cas de feu, et l'accessibilité de l'échangeur lors d'une opération de maintenance.

Pour cela, la présente invention a pour objet une turbomachine, comprenant :
- un premier bec de séparation apte à séparer un flux d'air entrant en un flux d'air radialement interne et un flux d'air radialement externe, dit flux secondaire ;
- un deuxième bec de séparation apte à séparer le flux d'air radialement interne en un flux primaire et un flux tertiaire, ce dernier parcourant une veine de flux tertiaire radialement externe à une veine de flux primaire parcourue par le flux primaire ;
- un échangeur de chaleur disposé dans la veine de flux tertiaire ; et
- un carter interne ;
- une virole interne de la veine de flux tertiarie disposée en aval de l'échangeur ;
la turbomachine étant remarquable en ce que l'échangeur comprend un corps et une bride s'étendant radialement intérieurement et en saillie du corps, la bride étant fixée au carter interne, l'échangeur comprenant en outre, en aval de la bride, une partie aval à laquelle est rapportée une paroi feu formant un bouclier thermique.

Avantageusement, la paroi feu correspond à une paroi coupe-feu permettant de retarder la propagation d'un éventuel feu depuis la veine de flux primaire (depuis la chambre de combustion par exemple), vers le reste de l'aéronef (vers la nacelle de l'aéronef). Le fait de rapporter la paroi feu à l'échangeur permet un gain de l'encombrement global mais aussi facilite la maintenance de ces éléments car une fixation additionnelle pour la paroi feu n'est plus nécessaire.

Selon un mode avantageux de l'invention, la partie aval de l'échangeur comprend une gorge s'étendant circonférentiellement, virole interne de la veine de flux tertiaire étant reçue dans la gorge.

L'échangeur a ainsi une fonction structurelle pour l'assemblage d'autres pièces et n'est plus seulement un bloc disposé dans une veine d'air. Ainsi, la virole ne nécessite pas d'éléments de fixation spécifiques pour l'assembler au carter ou pour garantir la continuité de la surface de guidage du flux d'air.

Préférentiellement, la virole interne ainsi que le carter interne correspondent à un capotage inter-aube de la turbomachine qui est disposé entre la veine de flux primaire et la veine de flux tertiaire. Avantageusement, le carter et la virole interne sont dans une continuité aérodynamique avec la veine de flux tertiaire, et constituent, de préférence, une paroi de guidage radialement interne du flux tertiaire.

Selon un mode avantageux de l'invention, la turbomachine comprend un joint isolant thermique disposé dans la gorge et interposé entre la virole et l'échangeur. Ce joint permet de limiter la déformation de la virole qui apparaîtrait du fait de la conduction thermique avec un échangeur chaud. Ainsi, on s'affranchit d'éléments de fixation de la virole au carter qui auraient pour but de rigidifier la virole et d'empêcher sa déformation.

Selon un mode avantageux de l'invention, la partie aval de l'échangeur comprend une gorge s'étendant circonférentiellement, la turbomachine comprenant en outre une virole interne de la veine de flux tertiaire à laquelle est rapportée une languette isolante qui est reçue dans la gorge.

Préférentiellement, la languette isolante agit comme une paroi coupe-feu additionnelle, similairement à la paroi feu de la partie aval de l'échangeur, de manière à retarder la propagation du feu vers la veine de flux tertiaire.

Avantageusement, la languette isolante permet de sécuriser davantage la liaison entre la virole et l'échangeur, de façon à constituer avec la paroi feu, une protection (bouclier thermique) qui s'étend axialement de la bride de fixation jusqu'à la virole. Dans cette configuration, la virole interne est protégée des chaleurs pouvant être dégagées de l'échangeur, ladite virole interne peut avantageusement être fabriquée à partir d'un matériau composite.

Selon un mode avantageux de l'invention, la turbomachine comprend un joint isolant thermique disposé dans la gorge et interposé entre la languette et l'échangeur.

Selon un mode avantageux de l'invention, la languette est fixée à la virole et est montée flottante dans la gorge.

De façon avantageuse, le montage de la languette dans la gorge est dépourvu de toute fixation et évite de créer des zones de contraintes mécaniques lorsque l'échangeur subit des dilations thermiques. A cet effet, le montage flottant de la virole dans la gorge autorise des déformations de dilatation suivant les directions axiale, radiale et circonférentielle.

Selon un mode avantageux de l'invention, la paroi feu est fixée à la bride. Ainsi, un élément de fixation (vis notamment) peut être mutualisé pour fixer l'échangeur et la paroi feu au carter.

Selon un mode avantageux de l'invention, la paroi feu épouse au moins partiellement le profil interne et le profil aval de la partie aval de l'échangeur. L'encombrement de l'ensemble « échangeur + paroi feu » est donc minimisé.

Préférentiellement, le profil interne de la partie aval est sensiblement parallèle à l'axe de la turbomachine, et le profil aval est sensiblement radial.

Selon un mode avantageux de l'invention, la partie aval a une longueur axiale comprise entre 20% et 50% de la longueur axiale de l'échangeur.

Dans cette configuration, la bride s'étend radialement intérieurement en saillie du corps, de préférence, dans une moitié aval de l'échangeur. Cela permet de faciliter le montage/démontage par l'aval, car la bride est facilement accessible, sans déséquilibrer mécaniquement le montage en porte-à-faux de la partie aval de l'échangeur.

Selon un mode avantageux de l'invention, la turbomachine comprend des bras structuraux s'étendant radialement au travers de la veine de flux tertiaire et délimitant entre eux des espaces inter-bras, la turbomachine comprenant un échangeur de chaleur dans chaque espace inter-bras, chacun des échangeurs comprenant un corps et une bride s'étendant radialement intérieurement et en saillie du corps respectif, chaque bride étant fixée au carter interne, la paroi feu étant fixée à chacun des échangeurs. A cet effet, la paroi feu s'étend circonférentiellement sur 360° autour de l'axe longitudinal de la turbomachine, assurant une continuité d'isolation thermique et une coupure du pont thermique apte à protéger toute une partie amont et radialement extérieure de ladite turbomachine d'une éventuelle propagation de feu.

Avantageusement, la fixation de l'échangeur dans la veine de flux tertiaire permet de limiter les perturbations aérodynamiques du flux nécessaire à la poussée de l'aéronef.

Selon un mode avantageux de l'invention, la turbomachine comprenant, en outre, un flasque de fixation de la virole, ledit flasque comportant une extrémité amont fixée à la bride de l'échangeur et la paroi feu étant comprise dans le flasque.

Selon un mode avantageux de l'invention, le flasque comprend une portion radiale en chevauchement radial avec la partie aval de l'échangeur, et la portion radiale du flasque comprend au moins un ajour traversé par au moins une connexion hydraulique reliée à l'échangeur. La connexion hydraulique permet d'alimenter en huile l'échangeur et/ou de récupérer l'huile refroidie dudit échangeur.

Selon un mode avantageux de l'invention, la turbomachine comprend une collerette s'étendant en saillie et vers l'aval depuis le corps de l'échangeur, ladite collerette affleurant la virole.

Avantageusement, la collerette permet de conserver la continuité aérodynamique de la veine de flux tertiaire, de manière à éviter toute fuite d'air radialement intérieurement vers le flasque de fixation.

De plus, la collerette permet d'isoler thermiquement et de sécuriser davantage la liaison entre la virole et l'échangeur, de façon à constituer une coupure du pont thermique qui s'étend axialement depuis le corps de l'échangeur jusqu'à la virole. Dans cette configuration, la virole interne est protégée des chaleurs pouvant être dégagées de l'échangeur, ladite virole interne peut avantageusement être fabriquée à partir d'un matériau composite.

Selon un mode avantageux de l'invention, une paroi feu est rapportée sur une surface inférieure de la collerette.

Avantageusement, la paroi feu correspond à une paroi coupe-feu permettant de retarder la propagation d'un éventuel feu provenant, par exemple, de la veine de flux primaire (de la chambre de combustion) vers la nacelle de l'aéronef. Le fait de rapporter la paroi feu à l'échangeur permet un gain de l'encombrement global mais aussi facilite la maintenance de ces éléments car une fixation additionnelle pour la paroi feu n'est plus nécessaire.

Préférentiellement, la paroi feu s'étend de la bride jusqu'à la collerette, formant ainsi un bouclier thermique sur toute la partie aval de l'échangeur.

Selon un mode avantageux de l'invention, la collerette s'étend axialement sur au plus 10% d'une longueur axiale totale de l'échangeur de chaleur. Avantageusement, une telle longueur axiale de la collerette permet d'assurer une séparation axiale et un éloignement entre la partie aval de l'échangeur et une portion amont de la virole interne, de manière à favoriser l'isolation thermique de ladite virole interne.

Selon un mode avantageux de l'invention, la turbomachine comprend une languette isolante interposée entre l'échangeur et la virole, ladite languette comprenant une surface supérieure en appui sur une surface inférieure d'une échancrure de l'échangeur, et une surface inférieure, fixée à la virole.

Préférentiellement, la languette isolante agit comme une paroi coupe-feu additionnelle, similairement à la paroi feu de la partie aval de l'échangeur, de manière à retarder la propagation du feu vers la veine de flux tertiaire.

Avantageusement, la languette isolante permet de sécuriser davantage la liaison entre la virole et l'échangeur, de façon à constituer avec la paroi feu, une protection (bouclier thermique) qui s'étend axialement de la bride de fixation jusqu'à la virole. Dans cette configuration, la virole interne est protégée de la chaleur pouvant être dégagées par l'échangeur, ladite virole interne peut avantageusement être fabriquée à partir d'un matériau composite.

Selon un mode avantageux de l'invention, la turbomachine comprend un joint isolant interposé entre la languette et l'échangeur.

Le joint isolant permet, d'une part, de limiter le transfert de chaleur de l'échangeur chaud vers la virole interne, et permet d'autre part d'autoriser, par déformation élastique dudit joint, des déformations de dilatation suivant les directions axiale, radiale et circonférentielle. En effet, le montage de la languette dans l'échancrure est dépourvu de toute fixation, et évite de créer des zones de contraintes mécaniques lorsque l'échangeur subit des dilations thermiques.

Ce joint permet de limiter la déformation de la virole qui apparaîtrait du fait de la conduction thermique avec un échangeur chaud. Ainsi, on s'affranchit d'éléments de rigidification (pouvant être lourds et encombrants) de la virole qui auraient pour but d'empêcher sa déformation.

Selon un mode avantageux de l'invention, le flasque est une paroi feu.

Selon un mode avantageux de l'invention, une paroi feu est intégrée à l'échangeur ou est fixée à sa bride.

Préférentiellement, la paroi feu fixée à la bride correspond au flasque étant ou comprenant la paroi feu et fixé à ladite bride.

Selon un mode avantageux de l'invention, la turbomachine comprend des bras structuraux s'étendant radialement au travers de la veine de flux tertiaire et délimitant entre eux des espaces inter-bras, la turbomachine comprenant un échangeur de chaleur dans chaque espace inter-bras, chacun des échangeurs comprenant un corps et une bride s'étendant radialement intérieurement et en saillie du corps respectif, chaque bride étant fixée au carter interne, le flasque étant commun à tous les échangeurs et son extrémité amont étant fixée à chacune des brides des échangeurs. A cet effet, le flasque d'étend circonférentiellement sur 360° autour de l'axe longitudinal de la turbomachine, assurant un maintien efficace de la virole interne.

Parallèlement, la paroi feu s'étend circonférentiellement sur 360° autour de l'axe longitudinal, assurant une continuité d'isolation thermique apte à protéger toute une partie amont et radialement extérieure de ladite turbomachine d'une éventuelle propagation de feu.

L'invention a également pour objet une turbomachine, comprenant :
- un premier bec de séparation apte à séparer un flux d'air entrant en un flux d'air radialement interne et un flux d'air radialement externe, dit flux secondaire ;
- un deuxième bec de séparation apte à séparer le flux d'air radialement interne en un flux primaire et un flux tertiaire, ce dernier parcourant une veine de flux tertiaire radialement externe à une veine de flux primaire parcourue par le flux primaire ;
- un échangeur de chaleur disposé dans la veine de flux tertiaire ;
- un carter interne ; et
- une virole interne de la veine de flux tertiaire disposée en aval de l'échangeur la turbomachine étant remarquable en ce que l'échangeur comprend un corps et une bride s'étendant radialement intérieurement et en saillie du corps, la bride étant fixée au carter interne, l'échangeur comprenant, en aval de la bride, une partie aval en porte-à-faux, la turbomachine comprenant en outre, un flasque de fixation de la virole, une extrémité amont du flasque étant fixée à la bride de l'échangeur.

La partie aval est en porte-à-faux en aval de la bride de fixation, car elle est dépourvue de toute autre fixation, mis à part la fixation de l'échangeur à la virole au niveau de ladite bride de fixation.

Ladite invention comprend au moins un des modes avantageux de l'invention ci-dessus.

L'échangeur, en plus d'être apte à efficacement refroidir l'huile par l'échange des calories avec l'air, permet d'assurer davantage de fonctions, tels que : l'agencement d'une paroi feu et la constitution d'un support de maintien pour la virole. Dans cette configuration, le nombre de pièces intermédiaires qui auraient été introduites pour répondre séparément aux différentes fonctions requises est fortement réduit, permettant ainsi de réduire la masse et le coût de fabrication de la turbomachine de l'invention. A cet effet, le montage et le démontage de l'échangeur sont facilités, ce qui permet ainsi d'améliorer la maintenabilité de la turbomachine.

De plus, l'invention est particulièrement avantageuse, car le positionnement de l'échangeur au niveau de la veine du flux tertiaire permet d'éviter d'entraver le passage de l'air dans le flux secondaire et donc le rendement du moteur. Ceci se traduit par une efficacité énergétique et une poussée optimisée qui avantageusement permettent de réduire la consommation de carburant et les émissions des gaz carboniques à effet de serre, réduisant ainsi l'impact environnemental des avions.

Il est entendu que chaque détail d'un mode de réalisation ci-dessous peut être combiné à chaque autre détail des autres modes de réalisation.

### Brève description des dessins

[Fig.1] représente une vue en coupe longitudinale d'une turbomachine selon l'invention, ladite turbomachine comprenant un échangeur de chaleur dans une veine de flux tertiaire ;
[Fig.2] représente une vue de face de la veine de flux tertiaire de la [Fig.1] comprenant plusieurs échangeurs de chaleur ;
[Fig.3] représente une vue en coupe d'un montage d'une virole interne sur l'échangeur, selon un premier mode de réalisation de l'invention ;
[Fig.4] est une vue en coupe et en perspective agrandie du montage de la virole interne sur l'échangeur de la [Fig.3] ;
[Fig.5] représente une vue en coupe du montage de la virole interne sur l'échangeur, selon une alternative au premier mode de réalisation de l'invention.
[Fig.6] représente une vue en coupe d'un montage d'une virole interne sur l'échangeur au moyen d'un flasque de fixation, selon un deuxième mode de réalisation de l'invention ;
[Fig.7] représente une vue en coupe d'un montage de la virole interne sur l'échangeur au moyen du flasque de fixation, selon un troisième mode de réalisation de l'invention ;
[Fig.8] est une vue en coupe agrandie du montage de la [Fig.6], avec le flasque comprenant au moins une connexion hydraulique ;
[Fig.9] illustre schématiquement une vue de face du flasque comprenant l'au moins une connexion hydraulique.

### Description détaillée

Dans la description qui va suivre, les termes « interne » et « externe » renvoient à un positionnement par rapport à l'axe longitudinal de rotation d'une turbomachine. La direction axiale correspond à la direction le long de l'axe longitudinal de rotation de la turbomachine. La direction radiale est perpendiculaire à l'axe longitudinal. L'amont et l'aval sont en référence au sens d'écoulement d'un flux dans la turbomachine.

Les figures montrent les éléments de manière schématique et ne sont pas représentées à l'échelle. En particulier, certaines dimensions sont agrandies pour faciliter la lecture des figures.

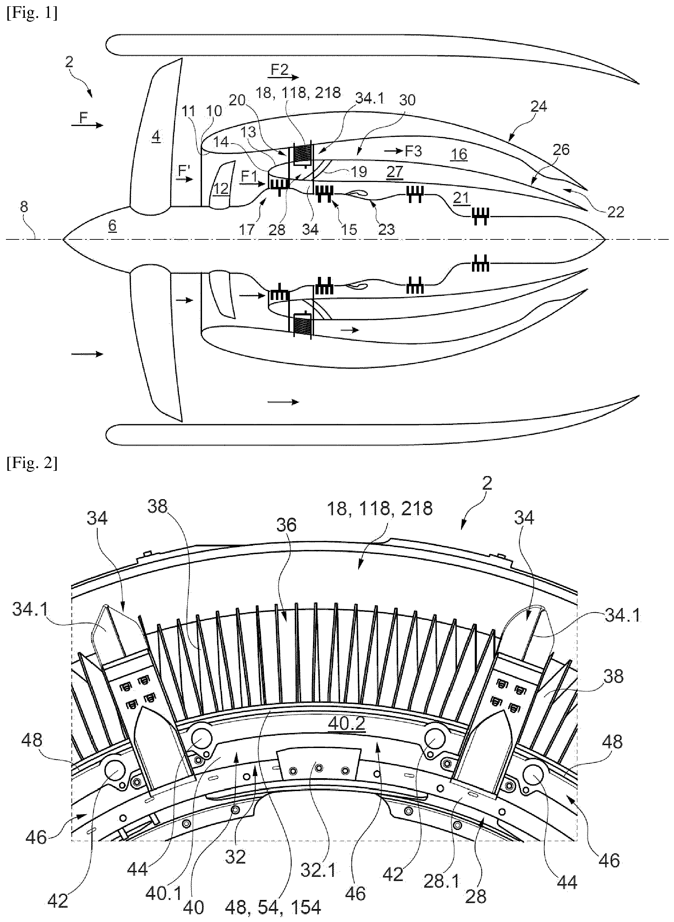

La [Fig.1] illustre une turbomachine 2 comprenant une hélice 4 solidaire d'un moyeu 6 tournant autour d'un axe longitudinal 8.

La turbomachine 2 évolue dans un flux d'air F dont le mouvement relatif à la turbomachine 2 est généré par la rotation de l'hélice 4 et l'avancement de l'aéronef sur laquelle la turbomachine 2 est montée.

Le flux d'air F est séparé par un premier bec de séparation 10 en un flux d'air radialement interne F' et un flux d'air radialement externe F2, dit flux secondaire F2. L'hélice 4 peut être disposée en amont du premier bec de séparation 10 ou en aval.

Le flux d'air radialement interne F' traverse une roue mobile 12 qui dirige ce dernier vers un deuxième bec de séparation 14 apte à séparer le flux d'air radialement interne F' en un flux primaire F1 et un flux tertiaire F3, ce dernier est distinct du flux secondaire F2.

Le premier bec de séparation 10 comprend une paroi interne formant une première paroi de guidage externe 11 du flux d'air radialement interne F', ladite première paroi de guidage externe 11 formant un profil convexe vu depuis ledit flux d'air radialement interne F'.

Le deuxième bec de séparation 14 comprend une paroi externe formant une deuxième paroi de guidage externe 13 du flux d'air radialement interne F' ayant traversé la roue mobile 12, ladite deuxième paroi de guidage externe 13 formant un profil convexe vu depuis le flux tertiaire F3. A cet effet, la deuxième paroi de guidage externe 13 correspond à une paroi de guidage radialement interne 13 du flux tertiaire F3.

Le flux tertiaire F3 pénètre dans une veine de flux tertiaire 16 radialement externe audit flux primaire F1. Le flux tertiaire F3 traverse un échangeur de chaleur 18, 118, 218 disposé dans la veine de flux tertiaire 16.

L'échangeur de chaleur 18, 118, 218 s'étend radialement et axialement dans la veine de flux tertiaire 16, et préférentiellement dans un tronçon amont 20 de la veine de flux tertiaire 16, présentant une section longitudinale divergente dans le sens de l'écoulement du flux tertiaire F3.

L'échangeur de chaleur 18 est disposé axialement environ entre le compresseur haute pression 15 et le compresseur basse pression 17 dit, « booster » 17, au droit d'un carter inter-compresseur.

Les compresseurs haute pression 15 et basse pression 17 comprennent des aubes tournantes et des aubes de redresseur disposées dans une veine de flux primaire 21 traversée par le flux primaire F1, ce dernier se dirigeant vers une chambre de combustion 23.

Un canal « VBV » 19 (Variabe Bleed Valve) débouche axialement en aval de l'échangeur de chaleur 18 dans la veine tertiaire 16. Il permet d'assurer une fonction de décharge en renvoyant une partie du flux primaire F1 vers le flux tertiaire F3 pour éviter le bourrage du compresseur haute pression 15 lorsque le débit du flux primaire F1 devient trop faible.

L'échangeur de chaleur 18, 118, 218 peut s'étendre de manière continue sur 360° dans le tronçon amont 20 de la veine 16 autour de l'axe longitudinal 8 de la turbomachine 2. Préférentiellement, la turbomachine 2 comprend plusieurs échangeurs de chaleur 18 s'étendant dans la veine de flux tertiaire 16 et subdivisant la veine angulairement de manière discontinue sur 360° autour de l'axe longitudinal 8. Chacun desdits échangeurs peut assurer indépendamment une fonction d'échange thermique entre l'air et un fluide.

Un seul échangeur de chaleur 18, 118, 218 peut combiner le refroidissement de plusieurs fonctions ou circuits d'huile de la turbomachine, et cela en fonction de différents paramètres liées au besoin de refroidissement de l'huile, *i.e.,* températures d'entrée, débits, température de sortie demandée ou les conditions de l'air, les différents circuits peuvent être mis en contact thermique ou bien isolés. L'échangeur 18 et en particulier ses passages d'huile peuvent supporter une température basse de l'huile pouvant atteindre -54°C.

Le tronçon amont 20 de la veine de flux tertiaire 16 comprend un carénage externe 24 et un capotage inter-veines 26, au moins un des carénage externe 24 et capotage inter-veines 26 étant rigidement lié à l'échangeur 18. Préférentiellement, le capotage inter-veines 26 est fixé à l'échangeur 18. Une telle fixation sera détaillée plus loin dans la présente description.

Le capotage inter-veines 26 comprend un carter interne 28, disposé axialement entre le compresseur haute pression 15 et le compresseur basse pression 17, et comprend, en outre, une virole interne 30 disposée en aval de l'échangeur 18. Dans cette configuration, le carter interne 28 et la virole interne 30 constituent, avec l'échangeur 18, 118, 218, la paroi de guidage radialement interne du flux tertiaire F3.

La [Fig.2] est une vue de face, *i.e.* dans le sens contraire à l'écoulement de l'air, de la veine de flux tertiaire 16 de la [Fig.1] comprenant plusieurs échangeurs de chaleur 18, 118, 218. On peut voir que les échangeurs 18, 118, 218 sont répartis angulairement dans la veine de flux tertiaire 16.

La turbomachine 2 comprend des bras structuraux 34 s'étendant radialement au travers de la veine de flux tertiaire 16 et délimitant entre eux des espaces inter-bras 36. Préférentiellement, la turbomachine 2 comprend entre 2 et 20 bras structuraux 34.

Parallèlement, la virole intérieure peut être monobloc et circonférentiellement continue sur 360°, ou ladite virole peut être subdivisée en plusieurs viroles internes allant jusqu'à 5 viroles.

L'échangeur 18, 118, 218 est préférentiellement obtenu par fabrication additive, ledit échangeur 18, 118, 218 s'étendant circonférentiellement entre deux bras structuraux 34 dans chaque espace inter-bras 36.

L'échangeur 18, 118, 218 comprend des surfaces d'échange thermique 38 correspondant à des passages d'huile et/ou des surfaces d'échange thermique avec l'air s'étendant radialement et axialement dans l'espace inter-bras 36. Un exemple de conceptions possibles est détaillé dans les demandes de brevet BE2021/5978, BE2021/5979, BE2021/5980, BE2021/5982 et BE2021/5983, la conception des surfaces d'échange thermique 38 ou des passages internes de l'huile n'étant pas le cœur de la présente invention.

L'échangeur 18, 118, 218 comprend un corps 32 avec une bride 32.1 s'étendant radialement intérieurement et en saillie dudit corps 32, de manière à ce que la bride 32.1 vienne se fixer à une bride annulaire 28.1 appartenant au carter interne 28. Ladite bride annulaire 28.1 est préférentiellement continue sur 360° autour de l'axe longitudinal de la turbomachine alors que la bride 32.1 de l'échangeur 18, 118, 218 a préférentiellement une étendue restreinte : la bride 32.1 est dans une position centrale par rapport au corps 32, suivant la direction circonférentielle. Cela permet avantageusement de laisser libre champ aux dilatations thermiques de l'échangeur 18, 118, 218 en permettant à ce dernier de s'étendre tangentiellement dans l'espace inter-bras 36.

Le sens de montage de l'échangeur 18, 118, 218 dans la turbomachine est préférentiellement d'aval en amont. Dans cette configuration, la fixation de l'échangeur 18, 118, 218 au carter interne 28 peut être assurée par vissage. Ainsi, la bride 32.1 peut être fixée à la bride annulaire 28.1 au moyen de deux à six vis, et plus préférentiellement au moyen de trois vis.

L'échangeur 18, 118, 218 comprend également une partie aval 40 disposée en aval de la bride 32.1 et donc montée en porte-à-faux. Cette partie aval 40 présente une surface interne avec un profil interne 40.1 par exemple cylindrique ou conique autour de l'axe longitudinal de la turbomachine, et une surface aval ayant un profil aval 40.2 sensiblement perpendiculaire à l'axe longitudinal. Alternativement, la forme de la partie aval 40 peut être plus libre, comme inspiré du document EP 3 674 531 A1.

Préférentiellement, la surface aval 40.2 de l'échangeur 18 comprend une arrivée d'huile 42 à une extrémité angulaire du corps 32, et une sortie d'huile 44 à une extrémité circonférentiellement opposée.

L'arrivée d'huile 42 et la sortie d'huile 44 sont reliées de manière fluidique à un collecteur d'huile et à un distributeur d'huile disposés dans une partie interne (non illustrée) du corps 32 de l'échangeur 18, 118, 218. Préférentiellement, la partie interne du corps 32 peut être creuse et dépourvue de matière (mis à part les collecteur et distributeur d'huile et les liaisons fluidiques), de manière à alléger l'échangeur 18, 118, 218.

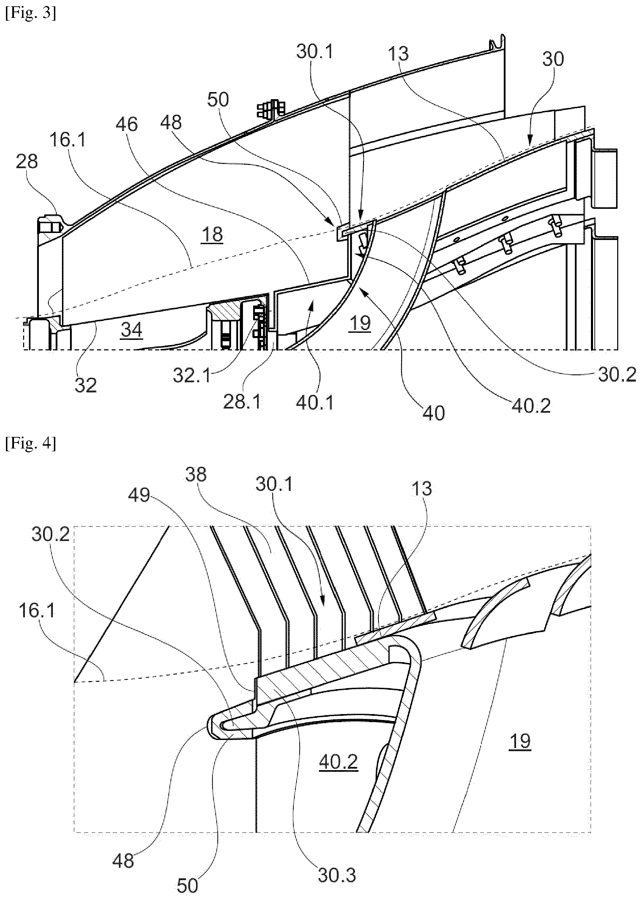

La partie aval 40 de l'échangeur 18 selon le premier mode de réalisation de l'invention comprend sur sa surface aval 40.2 une gorge 48 qui est destinée à recevoir, directement ou non, la virole 30 (voir figures 3-5).

Au droit de la surface aval 40.2, et radialement extérieurement à l'arrivée d'huile 42 et à la sortie d'huile 44, l'échangeur 118 selon un deuxième mode de réalisation de l'invention, comprend une collerette 54 s'étendant en saillie et vers l'aval depuis le corps 32 de l'échangeur 18. Tandis que l'échangeur 218 selon un troisième mode de réalisation de l'invention, comprend une échancrure 154. Les différents modes de réalisation seront détaillés ci-après dans cette description.

La [Fig.3] représente une vue en coupe du montage de la virole interne 30 sur l'échangeur 18, selon un premier mode de réalisation de l'invention.

La partie aval 40 comprend une paroi feu 46 apte à retarder la propagation d'un feu d'aval en amont de la turbomachine 2.

La paroi feu 46 peut correspondre à une couche en matériau isolant tel qu'un plastique à performances élevées. Préférentiellement, la paroi feu 46 est un polyimide Vespel^{®} disponible chez DuPont^{™}. Avantageusement, le polyimide Vespel^{®} est un plastique résistant au craquement à de très hautes températures avec d'excellentes caractéristiques de friction et d'usure. Contrairement à la plupart des plastiques, Vespel^{®} ne produit pas de dégagement de gaz significatif même lors de températures élevées.

De préférence, la paroi feu 46 est fixée à la bride 32.1 et s'étend de ladite bride 32.1 jusqu'à une gorge 48 disposée au droit de la surface aval 40.2, radialement extérieurement à l'arrivée d'huile 42 et à la sortie d'huile 44. La fixation de la paroi feu 46 sur le corps 32 de l'échangeur peut être assurée par collage ou par vissage.

Alternativement, la paroi feu 46 est préférentiellement intégralement formée avec le corps 32. A cet égard, le corps 32 et la paroi feu 46 sont tous deux formés en aluminium. Dans cette configuration, la paroi feu 46 correspond à une paroi en aluminium qui peut être davantage épaissie par rapport au reste du corps 32. En effet, la paroi feu 46 est suffisamment épaisse pour assurer une résistance à un éventuel feu.

La bride 32.1 de chaque échangeur 18 est fixée au carter interne 28, et la paroi feu 46 est fixée à chaque bride 32.1. A cet effet, les parois feu 46 de tous les échangeurs 18 s'étendant dans la veine permettent de manière avantageuse, de couper avec les bras structuraux 34, un pont thermique circonférentiel commun, protégeant ainsi toute la partie amont de la turbomachine sur 360°.

Préférentiellement, la gorge 48 s'étend circonférentiellement sur toute l'étendue circonférentielle de la partie aval 40. Cela permet à la virole interne 30 du capotage inter-veines 26 de la [Fig.1] d'être supporté par l'échangeur 18.

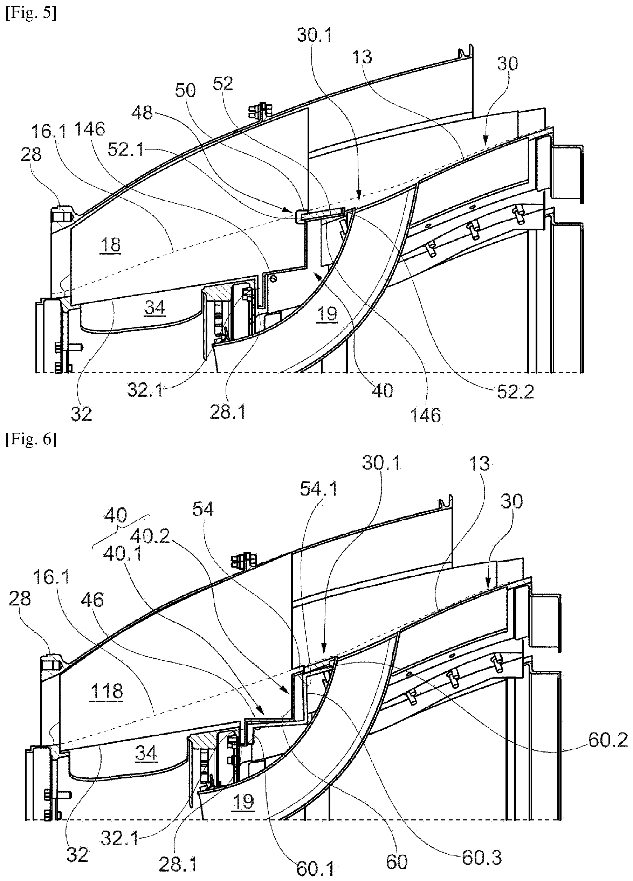

A cet effet, le montage de la virole interne 30 sur l'échangeur 18 est réalisé suivant deux modes de réalisation (figures 3 et 4 d'une part, et [Fig.5] d'autre part).

Toujours en lien avec la [Fig.3], on peut voir que la virole interne 30 est reçue dans la gorge 48 avec un joint isolant thermique 50 disposé dans la gorge 48 et interposé entre la virole 30 et l'échangeur 18.

Préférentiellement, le montage de la virole 30 dans la gorge 48 est un montage flottant et dépourvu de toute fixation.

A cet égard, le joint isolant thermique 50 est un élastomère apte à couper le pont thermique entre la virole 30 et l'échangeur 18. Préférentiellement, le joint 50 est un polyimide Vespel^{®} disponible chez DuPont^{™}. Ce joint 50 peut donc être similaire au matériau de la paroi feu 46. Toutefois, le joint 50 peut être obtenu à partir d'un matériau différent de celui de la paroi feu 46.

Avantageusement, le joint 50 peut avoir des propriétés mécaniques élastiques lui permettant d'absorber une partie des dilatations thermiques de l'échangeur 18 dans les directions axiale et radiale, de manière à éviter une propagation des contraintes mécaniques vers la virole 30 et se prémunir de tout risque de déformation et/ou de craquement.

La partie aval 40 a une longueur axiale comprise entre 10% et 50% de la longueur axiale de l'échangeur 18, et préférentiellement comprise entre 20% et 50%, et plus préférentiellement comprise entre 20% et 40%. Une telle longueur axiale permet d'étendre la couverture axiale de la paroi feu 46 et donc d'étendre davantage axialement la protection, sans pénaliser l'équilibre mécanique de l'échangeur : une partie aval trop imposante nécessiterait d'autres moyens de fixations en aval de l'échangeur et cela affecterait l'encombrement et la simplicité du montage.

De préférence, la paroi feu 46 épouse le profil interne 40.1 et le profil aval 40.2 de la partie aval 40 de l'échangeur 18, et s'étend radialement sur la bride 32.1 et jusqu'à la gorge 48. De façon avantageuse, et outre la protection de la turbomachine d'une propagation de feu, la paroi feu 46 permet de protéger la virole 30 des températures élevées de l'échangeur 18.

La virole 30 peut être avantageusement fabriquée à partir d'un matériau composite. Par exemple, la virole interne 30 peut être fabriquée à partir de fibre de carbone.

En effet, la température maximale que peut atteindre la paroi feu 46 et le joint 50 lors du fonctionnement de l'échangeur 18 est inférieur à la température maximale supportable par le matériau composite formant la virole interne 30.

Le montage direct de la virole 30 sur l'échangeur au moyen de la gorge 48 est avantageusement réalisé de l'aval vers l'amont, et par simple insertion, facilitant ainsi l'accessibilité de l'échangeur 18 et sa maintenabilité.

Le joint 50 épouse, d'un côté, la forme creuse de la gorge 48, et d'un autre côté la forme d'une portion amont 30.1 de la virole.

La [Fig.4] est une vue en coupe et en perspective agrandie du montage de la virole interne 30 sur l'échangeur 18. Il s'agit précisément d'une vue agrandie de la portion amont 30.1 de la virole 30 insérée dans la gorge 48.

En référence à la [Fig.4], la portion amont 30.1 comprend préférentiellement un bec amont 30.2, le joint 50 épouse la forme dudit bec amont 30.2 de manière à assurer une étanchéité fluidique entre la virole 30 et l'échangeur 18.

La portion amont 30.1 comprend, en outre, une plateforme 30.3 disposée radialement extérieurement au bec amont 30.2 et affleurant la paroi de guidage radialement interne 13, de manière à suivre la ligne aérodynamique 16.1 du flux d'air dans la veine de flux tertiaire 16 illustrée à la [Fig.1].

Dans cette configuration, la surface aval 40.2 peut comprendre un logement 49 apte à recevoir la plateforme 30.3 et éviter des fuites d'air vers un compartiment inter-veines 27 du capotage inter-veines 26 de la [Fig.1].

La [Fig.5] représente une vue en coupe du montage de la virole interne 30 sur l'échangeur 18 selon une alternative au premier mode de réalisation de l'invention.

On peut voir à la [Fig.5], que dans ce mode de réalisation, la virole interne 30 est indirectement supportée par l'échangeur 18. En effet, la portion amont 30.1 comprend une languette isolante 52 qui est reçue dans la gorge 48.

Préférentiellement, la languette 52 comprend une portion aval 52.2 qui est fixée par rivetage à la portion amont 30.1 de la virole 30.

La languette isolante 52 comprend un bec 52.1 ayant de préférence une forme similaire au bec amont 30.2 de la [Fig.4], et le montage de la languette 52 dans la gorge 48 est flottant.

Dans cette configuration, le joint 50 épouse la forme de la languette 52 et permet de couper le pont thermique entre la virole 30 et l'échangeur 18.

Préférentiellement, la languette 52 est formée à partir d'un matériau isolant, ledit matériau pouvant correspondre à celui de la paroi feu, *i.e.* polyimide Vespel^{®}.

Avantageusement, la paroi feu 46, selon le mode de réalisation de la [Fig.5], s'étend dans la partie aval 40 de l'échangeur 18, à partir de la bride 32.1 et vers la portion aval fixée 52.2 de la languette 52.

A cet effet, la portion amont 30.1 n'est pas en contact direct avec le joint 50, permettant ainsi de minimiser le transfert de la chaleur dissipée par l'échangeur 18 vers la virole 30. Aussi, cela permet plus de liberté lors de la conception de l'échangeur 18 et de la virole 30, la languette 52 pouvant servir de variable d'ajustement venant combler l'interstice entre ces deux éléments. Cette versatilité de conception est illustrée en représentant un échangeur 18 sur la [Fig.5] qui est axialement plus court que celui de la [Fig.2].

Avantageusement, la paroi feu 46 permet d'assurer la coupure du pont thermique apte à protéger toute une partie amont et radialement extérieure de la turbomachine d'une propagation de feu.

La languette 52 comprend une faible masse, permettant ainsi à la turbomachine de l'invention d'avoir une masse considérablement réduite comparée aux turbomachines de l'état de l'art.

N'étant fixée qu'à la virole 30 et étant flottante dans l'échangeur 18, la languette 52 facilite aussi le montage et le démontage de l'échangeur, ce qui permet d'assurer un gain de temps lors du montage et d'améliorer la maintenabilité de la turbomachine.

La [Fig.6] représente une vue en coupe d'un montage de la virole interne 30 sur l'échangeur 118 au moyen d'un flasque de fixation 60, selon le deuxième mode de réalisation de l'invention.

Les éléments identiques à ceux du premier mode de réalisation sont désignés par les mêmes numéros de référence, tandis que les éléments présentant des différences seront incrémentés de 100.

Préférentiellement, la collerette 54 et/ou l'échancrure 154 s'étend circonférentiellement sur toute l'étendue circonférentielle de la partie aval 40.

On peut voir que le flasque de fixation 60 de la virole 30 comprend une extrémité amont 60.1 directement fixée sur la bride 32.1. A cet égard, la bride 32.1 est préférentiellement fixée par vissage au carter interne 28, et l'extrémité amont 60.1 est également vissée sur la bride 32.1 au moyen des mêmes vis assemblant le flasque 60 au carter interne 28.

Le flasque 60 comprend une extrémité aval 60.2 opposée à l'extrémité amont 60.1, ladite extrémité aval 60.2 étant rigidement liée à une portion amont 30.1 de la virole 30. Préférentiellement, la liaison rigide entre le flasque 60 et la virole 30 correspond à un boulonnage et/ou un rivetage. Dans cette configuration, la virole 30 est rattachée au carter via la bride 32.1 de l'échangeur 118. Ceci peut être la seule fixation amont de la virole 30. La [Fig.6] laisse entrevoir une fixation aval de la virole 30 que nous ne discuterons pas en détail ici.

La partie aval 40 de l'échangeur 118 comprend la collerette 54 s'étendant vers la virole 30, et préférentiellement de manière affleurante avec la portion amont 30.1. A cet effet, la collerette 54 est à fleur de la paroi de guidage radialement interne 13.

Ainsi, la collerette 54 permet au flux tertiaire de suivre la ligne aérodynamique 16.1 dans la veine de flux tertiaire 16 illustrée à la [Fig.1]. La continuité aérodynamique assurée par la collerette 54 permet d'éviter des fuites d'air vers un compartiment inter-veines 27 du capotage inter-veines 26 de la [Fig.1].

La collerette 54 peut être venue de matière avec le corps 32 et peut s'étendre axialement jusqu'à une jonction aval 54.1 sur au plus 10% d'une longueur axiale totale de l'échangeur 118, et préférentiellement sur 5% de ladite longueur.

Préférentiellement, la paroi feu 46 s'étend jusqu'à une surface inférieure 54.1 de la collerette 54. Cela permet de couper le pont thermique de manière efficace entre la virole 30 et l'échangeur 118.

Le flasque 60 peut correspondre à une deuxième paroi feu en plus de la paroi feu 46 de la partie aval 40 de l'échangeur 118. Dans cette configuration, la protection contre le feu et l'isolation thermique des composants est maximisée.

Alternativement, le flasque 60 peut comprendre la paroi feu et la partie aval 40 de l'échangeur 118 peut être dépourvue de paroi feu. Cela permet de simplifier la fabrication de l'échangeur 118.

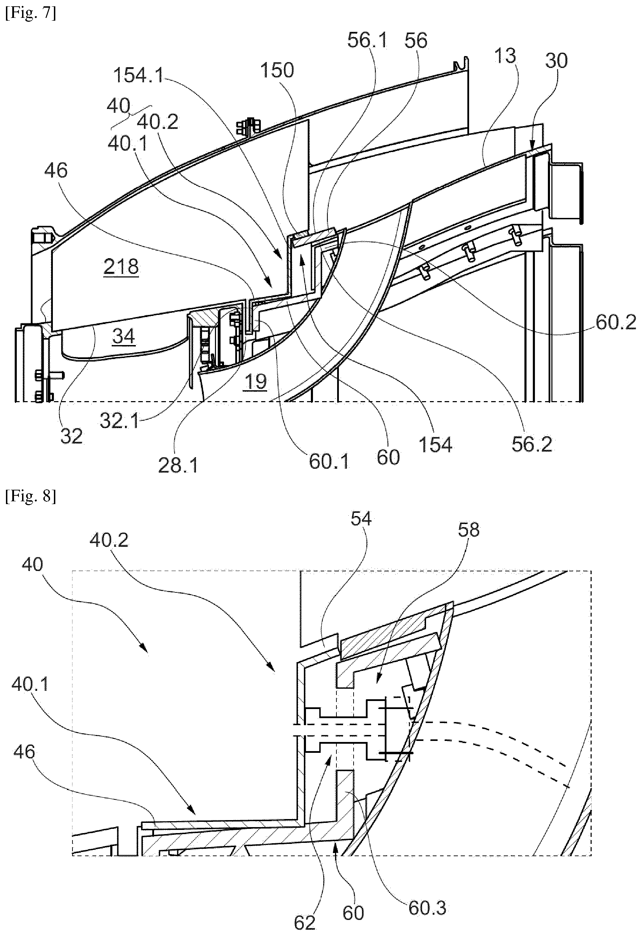

La [Fig.7] représente une vue en coupe d'un montage de la virole interne 30 sur l'échangeur 218 au moyen du flasque de fixation 60, selon le troisième mode de réalisation de l'invention.

La turbomachine 2 comprend une languette isolante 56 annulaire interposée entre l'échangeur 218 et la virole 30, ladite languette 56 comprenant une surface supérieure 56.1 en appui sur une surface inférieure 154.1 d'une échancrure 154 de l'échangeur 218, et une surface inférieure 56.2, fixée à la virole 30.

Préférentiellement, une portion aval de la languette 56 est fixée par rivetage à la portion amont 30.1 de la virole 30.

La languette 56 est formée, de préférence, à partir d'un matériau isolant, ledit matériau pouvant correspondre à celui de la paroi feu, *i.e.* polyimide Vespel^{®}.

La surface inférieure 154.1 de l'échancrure 154 est préférentiellement parallèle à la surface supérieure 56.1 de la languette 56. De préférence, le contact entre la languette 56 et l'échangeur 218 est un contact indirect car un joint isolant thermique 150 est interposé entre la surface inférieure 154.1 de l'échancrure 154 et la surface supérieure 56.1.

Dans cette configuration, le joint 150 permet de couper le pont thermique entre la virole 30 et l'échangeur 18, permettant ainsi de minimiser le transfert de la chaleur dissipée par l'échangeur 218 vers la virole 30. Aussi, cela permet plus de liberté lors de la conception de l'échangeur 218 et de la virole 30, la languette 56 pouvant servir de variable d'ajustement venant combler l'interstice entre ces deux éléments. Cette versatilité de conception est illustrée en représentant un échangeur 218 sur la [Fig.7] qui est moins volumineux que celui de la [Fig.6].

A cet égard, le joint 150 est un élastomère apte à couper le pont thermique entre la virole 30 et l'échangeur 218. Préférentiellement, le joint 150 est un polyimide Vespel^{®} disponible chez DuPont^{™}. Ce joint 150 peut donc être similaire au matériau de la paroi feu. Toutefois, le joint 150 peut être obtenu à partir d'un matériau différent de celui de la paroi feu.

La languette 56 comprend une faible masse (similairement à la languette 52 de l'échangeur 18 selon le mode de réalisation de la [Fig.5]), permettant ainsi à la turbomachine de l'invention d'avoir une masse considérablement réduite comparée aux turbomachines de l'état de l'art.

Avantageusement, la paroi feu 46 s'étend dans la partie aval 40 de l'échangeur 218, à partir de la bride 32.1 et vers la surface inférieure 154.1 de l'échancrure 154.

La paroi feu 46 permet d'assurer la coupure du pont thermique apte à protéger toute une partie amont et radialement extérieure de la turbomachine d'une propagation de feu.

N'étant fixée qu'à la virole 30 et étant flottante dans l'échangeur 218, la languette 56 facilite aussi le montage et le démontage de l'échangeur, ce qui permet d'assurer un gain de temps lors du montage et d'améliorer la maintenabilité de la turbomachine. Aussi, ce montage laisse libre champ aux déformations locales (dilatation thermiques) de la languette 56.

La [Fig.8] est une vue en coupe agrandie du montage de la [Fig.6], avec le flasque 60 comprenant au moins une connexion hydraulique 58 directement reliée à la surface aval 40.2 de l'échangeur 118. Il est entendu qu'une conception comparable peut être faite pour les variantes présentées aux figures 3 à 5 et à la [Fig.7].

La connexion hydraulique 58 correspond à une liaison fluidique entre l'échangeur 118 avec d'autres composants de la turbomachine, *i.e.* groupe de lubrification, moteur, boîte de vitesse, génératrice moteur ou tout composant électronique nécessitant un refroidissement).

Une première connexion 58 peut être directement reliée à l'arrivée d'huile 42, et la deuxième connexion 58 est reliée à la sortie d'huile 44 illustrées à la [Fig.2].

On peut voir à la [Fig.8] que le flasque 60 comprend des ajours 62 permettant le passage des connexions 58. Ces ajours 62 peuvent être agencés sur une portion radiale 60.3 du flasque 60 qui est en chevauchement radial avec la partie aval 40 de l'échangeur.

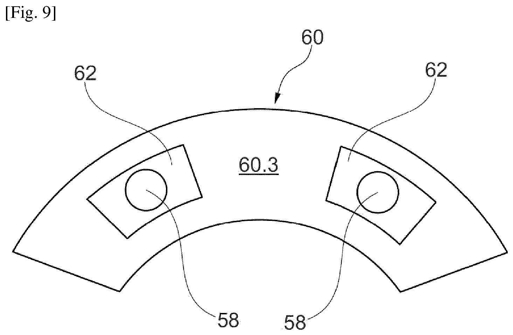

La [Fig.9] illustre schématiquement une vue de face du flasque 60 comprenant deux ajours 62, chacun étant traversé par la connexion hydraulique 58.

Préférentiellement, chaque ajour 62 est en vis-à-vis de l'arrivée d'huile 42 ou de la sortie d'huile 44.

Alternativement, une étanchéité (non représentée) peut être intégrée entre la connexion hydraulique 58 et l'ajour 62 correspondant. A cet effet, dans le cas où le flasque 60 correspond à la paroi feu, le flasque 60 peut être apte à assurer une protection thermique convenable à la turbomachine de manière à éviter toute faille au droit de l'ajour 62.

## Revendications

1. Turbomachine (2), comprenant :
- un premier bec de séparation (10) apte à séparer un flux d'air (F) entrant en un flux d'air radialement interne (F') et un flux d'air radialement externe (F2), dit flux secondaire (F2) ;
- un deuxième bec de séparation (14) apte à séparer le flux d'air radialement interne (F') en un flux primaire (F1) et un flux tertiaire (F3), ce dernier parcourant une veine de flux tertiaire (16) radialement externe à une veine de flux primaire (21) parcourue par le flux primaire (F1) ;
- un échangeur de chaleur (18 ; 118 ; 218) disposé dans la veine de flux tertiaire (16) ; et
- un carter interne (28) ;
- une virole interne (30) de la veine de flux tertiaire (16) disposée en aval de l'échangeur (18 ; 118 ; 218) ;
la turbomachine (2) étant **caractérisée en ce que**
l'échangeur (18 ; 118 ; 218) comprend un corps (32) et une bride (32.1) s'étendant radialement intérieurement et en saillie du corps (32), la bride (32.1) étant fixée au carter interne (28), l'échangeur (18) comprenant en outre, une partie aval (40) en aval de la bride (32.1), et une paroi feu (46) formant un bouclier thermique, ladite paroi feu (46) étant rapportée à la partie aval (40) et/ou intégralement formée avec ladite partie aval (40), et/ou la turbomachine (2) comprenant, en outre, un flasque (60) de fixation de la virole (30) comportant une extrémité amont (60.1) fixée à la bride (32.1) de l'échangeur (18 ; 118 ; 218) et la paroi feu (46) étant comprise dans le flasque (60).

2. Turbomachine (2) selon la revendication 1, **caractérisée en ce que** la partie aval (40) de l'échangeur (18) comprend une gorge (48) s'étendant circonférentiellement, la virole interne (30) étant reçue dans la gorge (48).

3. Turbomachine (2) selon la revendication 2, **caractérisée en ce qu'**elle comprend un joint (50) isolant thermique disposé dans la gorge (48) et interposé entre la virole (30) et l'échangeur (2).

4. Turbomachine (2) selon la revendication 1, **caractérisée en ce que** ladite turbomachine (2) comprenant un flasque (60) de fixation de la virole (30), ledit flasque (60) comprend une portion radiale (60.3) en chevauchement radial avec la partie aval (40) de l'échangeur (118 ; 218), et la portion radiale (60.3) du flasque (60) comprend au moins un ajour (62) traversé par au moins une connexion hydraulique (58) reliée à l'échangeur (118 ; 218).

5. Turbomachine (2) selon l'une des revendications 1 ou 2, **caractérisée en ce qu'**elle comprend une collerette (54) s'étendant en saillie et vers l'aval depuis le corps (32) de l'échangeur (118), ladite collerette (54) affleurant la virole (30).

6. Turbomachine (2) selon la revendication précédente, **caractérisée en ce que** la paroi feu (46) est rapportée sur une surface inférieure (54.1) de la collerette (54).

7. Turbomachine (2) selon l'une des revendications 1 à 6, **caractérisée en ce qu'**elle comprend une languette isolante (56) interposée entre l'échangeur (218) et la virole (30), ladite languette (56) comprenant une surface supérieure (56.1) en appui sur une surface inférieure (154.1) d'une échancrure (154) de l'échangeur (218), et une surface inférieure (56.2), fixée à la virole (30).

8. Turbomachine (2) selon la revendication 7, **caractérisé en ce qu'**elle comprend un joint isolant (150) interposé entre la languette (56) et l'échangeur (218).

9. Turbomachine (2) selon la revendication 1, **caractérisée en ce que** la partie aval (40) de l'échangeur (18) comprend une gorge (18) s'étendant circonférentiellement, la turbomachine (2) comprenant en outre une languette isolante (52) rapportée à la virole interne (30) et reçue dans la gorge (48).

10. Turbomachine (2) selon la revendication 9, **caractérisée en ce qu'**elle comprend un joint (50) isolant thermique disposé dans la gorge (48) et interposé entre la languette (52) et l'échangeur (18).

11. Turbomachine (2) selon la revendication 9 ou 10, **caractérisée en ce que** la languette (52) est fixée à la virole (30) et est montée flottante dans la gorge (48).

12. Turbomachine (2) selon l'une des revendications 1 à 11, **caractérisée en ce que** la paroi feu (46) est fixée à la bride (32.1).

13. Turbomachine (2) selon l'une des revendications 1 à 12, **caractérisée en ce que** la paroi feu (46) épouse au moins partiellement le profil interne (40.1) et le profil aval (40.2) de la partie aval (40) de l'échangeur (18).

14. Turbomachine (2) selon l'une des revendications 1 à 13, **caractérisée en ce que** la partie aval (40) a une longueur axiale comprise entre 20% et 50% de la longueur axiale de l'échangeur (18).

15. Turbomachine (2) selon l'une des revendications 1 à 14, **caractérisée en ce qu'**elle comprend des bras structuraux (34) s'étendant radialement au travers de la veine de flux tertiaire (16) et délimitant entre eux des espaces inter-bras (36), la turbomachine (2) comprenant un échangeur de chaleur (18) dans chaque espace inter-bras (36), chacun des échangeurs (18) comprenant un corps (32) et une bride (32.1) s'étendant radialement intérieurement et en saillie du corps respectif (32), chaque bride (32.1) étant fixée au carter interne (28), la paroi feu (46) étant fixée à chacun des échangeurs (18).

## Patentansprüche

1. Strömungsmaschine (2), umfassend:
- einen ersten Trennsteg (10), der dazu eingerichtet ist, einen einströmenden Luftstrom (F) in einen radial inneren Luftstrom (F') und einen radial äußeren Luftstrom (F2), sogenannten Sekundärstrom (F2), zu trennen;
- einen zweiten Trennsteg (14), der dazu eingerichtet ist, den radial inneren Luftstrom (F') in einen Primärstrom (F1) und einen Tertiärstrom (F3) zu trennen, wobei letzterer einen Tertiärströmungskanal (16) durchströmt, der radial außen eines Primärströmungskanals (21) angeordnet ist, welcher von dem Primärstrom (F1) durchströmt wird;
- einen Wärmetauscher (18; 118; 218), der in dem Tertiärströmungskanal (16) angeordnet ist; und
- ein inneres Gehäuse (28);
- eine innere Hülse (30) des Tertiärströmungskanals (16), die stromabwärts des Wärmetauschers (18; 118; 218) angeordnet ist;
wobei die Strömungsmaschine (2) **dadurch gekennzeichnet ist, dass** der Wärmetauscher (18; 118; 218) einen Körper (32) und einen Flansch (32.1) umfasst, der sich radial nach innen erstreckt und vom Körper (32) vorspringt, wobei der Flansch (32.1) an dem inneren Gehäuse (28) befestigt ist, wobei der Wärmetauscher (18) ferner einen stromabwärtigen Abschnitt (40) stromabwärts des Flansches (32.1) und ein Feuerschott (46) umfasst, das einen Wärmeschutz bildet,
wobei das Feuerschott (46) an dem stromabwärtigen Abschnitt (40) angebracht und/oder einstückig mit dem genannten stromabwärtigen Abschnitt (40) ausgebildet ist, und/oder die Strömungsmaschine (2) ferner einen Flansch (60) zur Befestigung der Hülse (30) umfasst, der ein stromaufwärtiges Ende (60.1) aufweist, das an dem Flansch (32.1) des Wärmetauschers (18; 118; 218) befestigt ist, und wobei das Feuerschott (46) in dem Flansch (60) enthalten ist.

2. Strömungsmaschine (2) nach Anspruch 1, **dadurch gekennzeichnet, dass** der stromabwärtige Abschnitt (40) des Wärmetauschers (18) eine sich umfangsseitig erstreckende Nut (48) umfasst, wobei die innere Hülse (30) in der Nut (48) aufgenommen ist.

3. Strömungsmaschine (2) nach Anspruch 2, **dadurch gekennzeichnet, dass** sie eine wärmeisolierende Dichtung (50) umfasst, die in der Nut (48) angeordnet und zwischen der Hülse (30) und dem Wärmetauscher (2) zwischengeschaltet ist.

4. Strömungsmaschine (2) nach Anspruch 1, **dadurch gekennzeichnet, dass** die genannte Strömungsmaschine (2) einen Flansch (60) zur Befestigung der Hülse (30) umfasst, wobei der genannte Flansch (60) einen radialen Abschnitt (60.3) in radialer Überlappung mit dem stromabwärtigen Abschnitt (40) des Wärmetauschers (118; 218) umfasst, und der radiale Abschnitt (60.3) des Flansches (60) mindestens eine Öffnung (62) umfasst, durch die mindestens eine hydraulische Verbindung (58) geführt ist, die mit dem Wärmetauscher (118; 218) verbunden ist.

5. Strömungsmaschine (2) nach einem der Ansprüche 1 oder 2, **dadurch gekennzeichnet, dass** sie einen Kragen (54) umfasst, der sich vorspringend und stromabwärts von dem Körper (32) des Wärmetauschers (118) erstreckt, wobei der genannte Kragen (54) bündig mit der Hülse (30) ist.

6. Strömungsmaschine (2) nach dem vorhergehenden Anspruch, **dadurch gekennzeichnet, dass** das Feuerschott (46) auf einer Unterseite (54.1) des Kragens (54) angebracht ist.

7. Strömungsmaschine (2) nach einem der Ansprüche 1 bis 6, **dadurch gekennzeichnet, dass** sie eine isolierende Lasche (56) umfasst, die zwischen dem Wärmetauscher (218) und der Hülse (30) zwischengeschaltet ist, wobei die genannte Lasche (56) eine Oberseite (56.1) umfasst, die an einer Unterseite (154.1) einer Ausnehmung (154) des Wärmetauschers (218) anliegt, und eine Unterseite (56.2), die an der Hülse (30) befestigt ist.

8. Strömungsmaschine (2) nach Anspruch 7, **dadurch gekennzeichnet, dass** sie eine isolierende Dichtung (150) umfasst, die zwischen der Lasche (56) und dem Wärmetauscher (218) zwischengeschaltet ist.

9. Strömungsmaschine (2) nach Anspruch 1, **dadurch gekennzeichnet, dass** der stromabwärtige Abschnitt (40) des Wärmetauschers (18) eine sich umfangsseitig erstreckende Nut (48) umfasst, wobei die Strömungsmaschine (2) ferner eine isolierende Lasche (52) umfasst, die an der inneren Hülse (30) angebracht und in der Nut (48) aufgenommen ist.

10. Strömungsmaschine (2) nach Anspruch 9, **dadurch gekennzeichnet, dass** sie eine wärmeisolierende Dichtung (50) umfasst, die in der Nut (48) angeordnet und zwischen der Lasche (52) und dem Wärmetauscher (18) zwischengeschaltet ist.

11. Strömungsmaschine (2) nach Anspruch 9 oder 10, **dadurch gekennzeichnet, dass** die Lasche (52) an der Hülse (30) befestigt und in der Nut (48) schwimmend gelagert ist.

12. Strömungsmaschine (2) nach einem der Ansprüche 1 bis 11, **dadurch gekennzeichnet, dass** das Feuerschott (46) an dem Flansch (32.1) befestigt ist.

13. Strömungsmaschine (2) nach einem der Ansprüche 1 bis 12, **dadurch gekennzeichnet, dass** das Feuerschott (46) zumindest teilweise an ein inneres Profil (40.1) und an ein stromabwärtiges Profil (40.2) des stromabwärtigen Abschnitts (40) des Wärmetauschers (18) angepasst ist.

14. Strömungsmaschine (2) nach einem der Ansprüche 1 bis 13, **dadurch gekennzeichnet, dass** der stromabwärtige Abschnitt (40) eine axiale Länge aufweist, die zwischen 20 % und 50 % der axialen Länge des Wärmetauschers (18) liegt.

15. Strömungsmaschine (2) nach einem der Ansprüche 1 bis 14, **dadurch gekennzeichnet, dass** sie strukturelle Arme (34) umfasst, die sich radial durch den Tertiärströmungskanal (16) erstrecken und zwischen sich Zwischenräume (36) begrenzen, wobei die Strömungsmaschine (2) in jedem Zwischenraum (36) einen Wärmetauscher (18) umfasst, wobei jeder Wärmetauscher (18) einen Körper (32) und einen Flansch (32.1) umfasst, der sich radial nach innen erstreckt und von dem jeweiligen Körper (32) vorspringt, wobei jeder Flansch (32.1) an dem inneren Gehäuse (28) befestigt ist, und wobei das Feuerschott (46) an jedem der Wärmetauscher (18) befestigt ist.

## Claims

1. Turbomachine (2), comprising:
- a first splitter (10) configured to separate an incoming air flow (F) into a radially inner air flow (F') and a radially outer air flow (F2), called a secondary flow (F2);
- a second splitter (14) configured to separate the radially inner air flow (F') into a primary flow (F1) and a tertiary flow (F3), the tertiary flow (F3) flowing through a tertiary flow duct (16) that is radially external to a primary flow duct (21) through which the primary flow (F1) flows;
- a heat exchanger (18; 118; 218) arranged in the tertiary flow duct (16); and
- an inner casing (28);
- an inner shroud (30) of the tertiary flow duct (16) arranged downstream of the heat exchanger (18; 118; 218);
the turbomachine (2) being **characterized in that**
the heat exchanger (18; 118; 218) comprises a body (32) and a flange (32.1) extending radially inwards and projecting from the body (32), the flange (32.1) being fastened to the inner casing (28), the heat exchanger (18) further comprising a downstream portion (40) downstream of the flange (32.1), and a fire wall (46) forming a thermal shield, the fire wall (46) being attached to the downstream portion (40) and/or formed integrally with the downstream portion (40), and/or **in that** the turbomachine (2) further comprises a fixing flange (60) for fixing the shroud (30), the fixing flange (60) having an upstream end (60.1) fastened to the flange (32.1) of the heat exchanger (18; 118; 218), and the fire wall (46) being included in the fixing flange (60).

2. Turbomachine (2) according to claim 1, **characterized in that** the downstream portion (40) of the heat exchanger (18) comprises a groove (48) extending circumferentially, the inner shroud (30) being received in the groove (48).

3. Turbomachine (2) according to claim 2, **characterized in that** it comprises a thermally insulating seal (50) arranged in the groove (48) and interposed between the shroud (30) and the heat exchanger (2).

4. Turbomachine (2) according to claim 1, **characterized in that** the turbomachine (2) comprises a fixing flange (60) for fixing the shroud (30), the fixing flange (60) comprising a radial portion (60.3) in radial overlap with the downstream portion (40) of the heat exchanger (118; 218), and the radial portion (60.3) of the fixing flange (60) comprising at least one opening (62) traversed by at least one hydraulic connection (58) connected to the heat exchanger (118; 218).

5. Turbomachine (2) according to any one of claims 1 and 2, **characterized in that** it comprises a collar (54) projecting downstream from the body (32) of the heat exchanger (118), the collar (54) being flush with the shroud (30).

6. Turbomachine (2) according to the preceding claim, **characterized in that** the fire wall (46) is attached to a lower surface (54.1) of the collar (54).

7. Turbomachine (2) according to any one of claims 1 to 6, **characterized in that** it comprises an insulating tab (56) interposed between the heat exchanger (218) and the inner shroud (30), the tab (56) comprising an upper surface (56.1) bearing against a lower surface (154.1) of a notch (154) of the heat exchanger (218), and a lower surface (56.2) fastened to the shroud (30).

8. Turbomachine (2) according to claim 7, **characterized in that** it comprises an insulating seal (150) interposed between the tab (56) and the heat exchanger (218).

9. Turbomachine (2) according to claim 1, **characterized in that** a downstream portion (40) of the heat exchanger (18) comprises a groove (48) extending circumferentially, the turbomachine (2) further comprising an insulating tab (52) attached to the inner shroud (30) and received in the groove (48).

10. Turbomachine (2) according to claim 9, **characterized in that** it comprises a thermally insulating seal (50) arranged in the groove (48) and interposed between the tab (52) and the heat exchanger (18).

11. Turbomachine (2) according to claim 9 or 10, **characterized in that** the tab (52) is fastened to the shroud (30) and is mounted in a floating manner in the groove (48).

12. Turbomachine (2) according to any one of claims 1 to 11, **characterized in that** the fire wall (46) is fastened to the flange (32.1).

13. Turbomachine (2) according to any one of claims 1 to 12, **characterized in that** the fire wall (46) at least partially conforms to the internal profile (40.1) and a downstream profile (40.2) of the downstream portion (40) of the heat exchanger (18).

14. Turbomachine (2) according to any one of claims 1 to 13, **characterized in that** the downstream portion (40) has an axial length of between 20% and 50% of the axial length of the heat exchanger (18).

15. Turbomachine (2) according to any one of claims 1 to 14, **characterized in that** it comprises structural arms (34) extending radially across the tertiary flow duct (16) and defining between them inter-arm spaces (36), the turbomachine (2) comprising a heat exchanger (18) in each inter-arm space (36), each heat exchanger (18) comprising a body (32) and a flange (32.1) extending radially inwards and projecting from the respective body (32), each flange (32.1) being fastened to the inner casing (28), the fire wall (46) being fastened to each of the heat exchangers (18).
